(19) Europäisches Patentamt
European Patent Office
Office européen des brevets

(11) Veröffentlichungsnummer: **0 025 822**
**B1**

(12) # EUROPÄISCHE PATENTSCHRIFT

(45) Veröffentlichungstag der Patentschrift: **22.12.82**

(51) Int. Cl.³: **C 08 G 77/46,** C 08 G 81/00, C 08 J 9/00, C 08 L 75/04

(21) Anmeldenummer: **80103842.3**

(22) Anmeldetag: **07.07.80**

(54) **Verfahren zur Herstellung von Polysiloxan-Polyoxyalkylen-Mischpolymerisaten und deren Verwendung bei der Herstellung von Polyurethan-Schaumstoffen.**

(30) Priorität: **21.07.79 DE 2929588**

(43) Veröffentlichungstag der Anmeldung: **01.04.81 Patentblatt 81/13**

(45) Bekanntmachung des Hinweises auf die Patenterteilung: **22.12.82 Patentblatt 82/51**

(84) Benannte Vertragsstaaten: **BE DE FR GB IT NL**

(56) Entgegenhaltungen:
***Cited Documents (56):***
**DE-A-1 545 110**
**DE-A-2 802 668**

(73) Patentinhaber: **BAYER AG, Zentralbereich Patente, Marken und Lizenzen, D-5090 Leverkusen 1, Bayerwerk (DE)**

(72) Erfinder: **de Montigny, Armand, Dr., Walter-Flex-Strasse 17, D-5090 Leverkusen (DE)**
Erfinder: **Ilger, Hans-Walter, Dr., Im Tentenfeld 27, D-5064 Rösrath (DE)**
Erfinder: **Gonzalez-Dörner, Alberto C., Dr., c/o Metzeler INESPO Ctra. B-142 a Sentmenat Km. 6, Polinya Barcelona (ES)**
Erfinder: **Moretto, Hans-Heinrich, Dr., Formesstrasse 13, D-5000 Köln 80 (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Polysiloxan-Polyoxyalkylen-Mischpolymerisaten und deren Verwendung bei der Herstellung von Polyurethan-Schaumstoffen

Die vorliegende Erfindung betrifft ein Verfahren zur Herstellung von Polysiloxan-Polyoxyalkylen-Mischpolymerisaten, die als oberflächenaktive Mittel bei der Herstellung von Polyurethanschaumstoffen brauchbar sind.

Es ist bekannt, dass Polysiloxan-Polyoxyalkylen-Mischpolymerisate als Trennmittel, beschlagsverhindernde Mittel, Schmiermittel, Zusatzstoffe zu Farben usw. brauchbar sind, und es ist ebenfalls bekannt, dass sie sich besonders gut als Schaumstabilisatoren bei der Herstellung von Polyurethanschaumstoffen eignen. Es sind daher schon verschiedene Arten von Siloxan-Polyoxyalkylen-Mischpolymerisaten hergestellt worden, die in zwei Gruppen eingeordnet werden können, nämlich nach der Bindungsart zwischen dem Siloxanteil und dem Polyoxyalkylenteil, wobei die erste vom SiOC-Typ und die zweite vom SiC-Typ ist.

Im allgemeinen wird die Herstellung solcher Blockmischpolymerer bevorzugt, deren Blöcke über SiOC-Bindungen verknüpft sind (vgl. z.B. DE-AS-1 595 730, DE-OS-2 413 987 oder DE-OS-1 745 423).

Ein Nachteil der bekannten Verfahren besteht sehr oft darin, dass die Siloxanblöcke über umgekehrte Hydrolysen – also langwierige Prozesse oder über zusätzliche Umwege (z.B. wie in DE-OS-1 745 423) hergestellt werden müssen. Oft muss auch von gesondert herzustellenden Ausgangsprodukten ausgegangen werden, wobei dann zusätzlich keine mit an Kohlenstoff gebundenem Hydroxyl spontan reagierende siliciumfunktionelle Blöcke entstehen (DE-OS-2 413 987).

Es war daher eine Aufgabe der vorliegenden Erfindung, ein Verfahren bereitzustellen, bei dem der Siloxanblock schnell und sicher aus grosstechnisch anfallenden Ausgangsprodukten aufgebaut werden kann und bei dem die Verknüpfung der Siloxan- und Polyoxyalkylenblöcke praktisch spontan erfolgt.

Die vorliegende Erfindung betrifft ein Verfahren zur Herstellung von Polyorganosiloxan-Polyoxyalkylen-Blockmischpolymerisaten der allgemeinen Formel

$$[R^{-1}Si(OSiR_2)_n]_mZ_{m-1}(OR^2)_{m+2}$$

in der

R eine gegebenenfalls halogensubstituierte Alkylgruppe mit bis zu 4 C-Atomen,

$R^1$ den Substituenten R bzw. einen Phenylrest,

$R^2$ einen aliphatischen, gegebenenfalls ungesättigten Rest mit bis zu 18 C-Atomen, oder aber eine Gruppe der Zusammensetzung

$$R^3(OCH_2CH_2)_x(OCH_2\underset{\displaystyle CH_3}{\overset{|}{C}}H)_y\text{-},$$

eine difunktionelle Einheit wie –O– oder

$$-O\left[\begin{array}{c}R^4\\|\\C\\|\\R^4\end{array}\right]_p O-$$

darstellt, wobei

$R^3$ ein Kohlenwasserstoffrest mit bis zu 4 C-Atomen,

$R^4$ gleich oder verschieden ein Wasserstoffatom oder $R^3$,

n eine Zahl zwischen 3 und 30,

m eine Zahl zwischen 1 und 15,

x eine Zahl zwischen 0 und 68,

y eine Zahl zwischen 0 und 52,

x+y eine Zahl zwischen 1 und 68,

p eine Zahl zwischen 2 und 12

bedeutet, welches dadurch gekennzeichnet ist, dass ein Organopolysiloxan der allgemeinen Formel

$$R^1Si\ (OSiR_2)_n\ U_{3-a-b}Cl_aW_b$$

in der

U einen Rest einer niederen einbasischen Carbonsäure mit bis zu 4 C-Atomen, vorzugsweise einen Acetatrest, und

W einen Rest einer fluorierten Alkansulfonsäure darstellt, wobei

a gleich oder kleiner als 1 und

b gleich oder kleiner als 0,5 ist,

ist, das durch Umsetzung von $R^1SiCl_3$ mit einem Diorganopolysiloxan in Gegenwart fluorierter Alkansulfonsäure bzw. deren Salzen in überschüssiger einbasischer Carbonsäure erhalten wird, mit einem Gemisch von $R^2OH$ und H–Z–H, dessen Zusammensetzung durch den Index m bestimmt wird, in Gegenwart einer Base in einem organischen Lösungsmittel umgesetzt wird.

Ferner ist Gegenstand der vorliegenden Erfindung, die Verwendung erfindungsgemäss erhaltener Polyorganopolysiloxan-Polyäther-Verbindungen als Stabilisatoren für Polyurethanweichschäume.

Das erfindungsgemässe Verfahren hat den Vorteil, dass man von einem gut und schnell zugänglichen Polyorganopolysiloxan mit ≡SiX-Gruppen ausgehen kann, wobei X hauptsächlich den Rest einer Carbonsäure, z.B. Acetat oder Propionat bedeutet. In geringem Masse liegt X je nach Reaktionsführung als Chlor vor. X kann ebenfalls in untergeordnetem Masse den Rest der als Katalysator eingesetzten fluorierten Alkansulfonsäure, z.B. $-O_3-SC_4F_9$ bedeuten. Die Herstellung dieser Polyorganosiloxane ist z.B. in DE-OS-2 802 668 oder DE-OS-2 855 927 beschrieben. Sie erfolgt durch Umsetzung eines Chlorsilanes oder partiellen Hydrolysaten davon mit linearen oder cyclischen Organosiloxanen in Gegenwart einer Kombination eines Katalysators aus der Reihe der fluo-

rierten Alkansulfonsäuren bzw. deren Salzen und überschüssigen einbasischen Carbonsäure, z.B. Essigsäure oder Propionsäure. Diese Verbindungen sind dadurch charakterisiert, dass sie im Gegenteil zu den in DE-OS-2 413 987 beschriebenen Siloxanblöcken, dank der oben beschriebenen Endgruppen in Gegenwart eines Protonenfängers praktisch spontan mit an Kohlenstoff gebundenen Hydroxyl-Gruppen reagieren. Sie unterscheiden sich prinzipiell von den in DE-AS-1 595 730 eingesetzten Vorstufen, dadurch dass sie keine

O
|
$\equiv$ SiOSOSi $\equiv$ -Gruppierungen aufweisen kön-
|
O

nen. Diese ebenfalls spontan mit an Kohlenstoff gebundenen Hydroxylgruppen reagierenden Einheiten können zu unerwünschten Nebenprodukten führen. Das Verfahren ist zusätzlich dadurch charakterisiert, dass der Siloxanblock im Mittel nur eine Verzweigung aufweist. Der Wunsch nach höher verzweigten Endprodukten wird jedoch dadurch erfüllt, dass aufgrund der Reaktionsfreudigkeit des erfindungsgemäss eingesetzten Siloxanblockes der Verzweigungsgrad gleichzeitig mit der Verknüpfung der Siloxan- und Polyoxyalkylenblöcke eingestellt werden kann. Diese Art der Steuerung des Verzweigungsgrades besitzt den Vorteil, dass man ausgehend von einem einzigen Polyorganopolysiloxan definierter Zusammensetzung, zu einer Vielzahl von unterschiedlichst verzweigten Endprodukten gelangt. Es entfällt also die für jeden gewünschten Verzweigungsgrad des Endproduktes notwendige gesonderte Herstellung des betreffenden Polysiloxanvorproduktes. Wie im folgenden gezeigt werden kann, erfolgt die Steuerung des Verzweigungsgrades gleichzeitig – also ohne zusätzlichen Aufwand – mit der Verknüpfung der Blöcke. Dies wird dadurch erreicht, dass die (auf die Hydroxylendgruppe bezogen) monofunktionellen Polyoxyalkylenblöcke mit (auf die Hydroxylgruppe bezogen) difunktionellen Verbindungen in berechneten Verhältnissen gemischt werden und gleichzeitig mit dem gewählten Polyorganopolysiloxan in einem organischen Lösungsmittel in Gegenwart eines Protonenfängers umgesetzt werden.

Die erfindungsgemäss hergestellten Produkte zeigen bereits in geringer Konzentration gute stabilisierende Eigenschaften bei der Herstellung von Polyurethanschäumen. Die erhaltenen Schäume zeichnen sich durch eine feinporige Struktur und eine sehr gute Offenzelligkeit aus.

Als Ausgangsmaterialien für das erfindungsgemässe Verfahren werden vorzugsweise Polyäther der Formel

$CH_3$
|
$C_4H_9O[OCH_2CH_2]_x\ [OCH_2CH]_y\ OH$

eingesetzt, deren OH-Zahl sich zwischen 22 und 50 bewegt und in denen der Wert x zwischen 8 und 40 schwankt. x kann jedoch in bestimmten Fällen 0 sein. Der Wert für y liegt vorzugsweise zwischen 6 und 30.

Die Herstellung der in Frage kommenden Polyorganopolysiloxane ist in DE-OS-2 802 668 beschrieben, wobei jedoch erfindungsgemäss Produkte, die in Gegenwart von Schwefelsäure als Katalysator hergestellt worden sind, weniger gut geeignet sind.

Beispiele für die Gruppen R sind die Methyl-, Chlormethyl-, Äthyl- und Propylreste, $R^3$ ist vorzugsweise ein $OC_4H_9$-Rest, möglich sind jedoch ebenfalls $CH_3O$-, $C_2H_5O$-, $C_3H_7O$-, $C_3H_5O$-Reste.

Beispiele für die Verbindung H–Z–H sind $H_2O$, $HOCH_2CH_2OH$,

$CH_3$ $CH_3$ $CH_3$
| | |
HOCH–CH–OH, HOCH–$CH_2OH$, $HOCH_2CH_2CH_2OH$,

$CH_3$
|
$CH_2CHCH_2CH_2CH$–$CH_3$, $CH_3CH$–CH–$CHCH_3$.
| | | |
OH OH OH OH

Verbindungen mit sekundären OH-Gruppen eignen sich besonders. Der Wert m des Fertigproduktes liegt vorzugsweise zwischen 1 und 10 und der Wert n zwischen 6 und 24.

Die Reaktion wird im allgemeinen so durchgeführt, dass man das Polyorganosiloxan mit einem Lösungsmittel, vorzugsweise mit einem aromatischen wie z.B. Toluol oder Xylol vermischt und anschliessend mit einem Gemisch aus $R^2OH$, H–Z–H und Toluol schnell verrührt. In diese Mischung wird bei Raumtemperatur etwa die stöchiometrische Menge $NH_3$ eingeleitet. Anschliessend wird ein Überschuss an $NH_3$ eingeleitet und ca. 1 Stunde bei ca. 70 °C gerührt. Nach dem Abkühlen wird das ausgefallene Salz filtriert und bei ca. 100 °C im Vakuum des Lösungsmittel entfernt. Diese bevorzugten Reaktionsbedingungen können selbstverständlich auch den jeweiligen Erfordernissen angepasst werden und somit von den hier genannten abweichen.

Die anfallenden gelblich gefärbten, klaren Lösungen besitzen je nach Zusammensetzung eine Viskosität zwischen 600 und 3500 mPa·s.

Diese Produkte eignen sich als Stabilisatoren bei der Herstellung von Polyurethanweichschäumen.

Polyurethanschaumstoffe werden nach dem Isocyanat-Polyadditionsverfahren aus Verbindungen mit mehreren aktiven Wasserstoffatomen, insbesondere Hydroxyl-und/oder Carboxylgruppen enthaltenden Verbindungen und Polyisocyanaten, gegebenenfalls unter Mitverwendung von Wasser, Aktivatoren, Emulgatoren, Schaumstabilisatoren und anderen Zusatzstoffen seit langem im technischen Massstab hergestellt (R. Vieweg, A. Höchtlein, Kunststoff-Handbuch, Band VII, Polyurethane, Hanser-Verlag München 1966).

Bei der Herstellung von Polyurethan-Schaumstoffen werden eingesetzt:

1. Als Ausgangskomponenten aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q\,(NCO)_n$$

in der

n = 2–4, vorzugsweise 2, und

Q einen aliphatischen Kohlenwasserstoffrest mit 2–18, vorzugsweise 6–10 C-Atomen,

einen cycloaliphatischen Kohlenwasserstoffrest mit 4–15, vorzugsweise 5–10 C-Atomen,

einen aromatischen Kohlenwasserstoffrest mit 6–15, vorzugsweise 6–13 C-Atomen,

oder einen araliphatischen Kohlenwasserstoffrest mit 8–15, vorzugsweise 8–13 C-Atomen,

bedeuten, z.B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan, 2,4'- und/oder -4,4'-diisocyanat, Naphthylen-1,5-diisocyanat.

Ferner kommen beispielsweise erfindungsgemäss in Frage: Triphenylmethan-4,4',4''-triisocyanat, Polyphenyl-polymethylenpolyisocyanate, wie sie durch Anilin-Formaldehyd-Kondensation und anschliessende Phosgenierung erhalten und z.B. in den GB-Patentschriften 874 430 und 848 671 beschrieben werden, m- und p-Isocyanatophenylsulfonyl-isocyanate gemäss der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäss US-Patentschrift 3 492 330, Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patenschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäss der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäss der DE-Patentschrift 1 072 385 und polymere Fettsäureester enthaltende Polyisocyanate gemäss der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren («TDI»), Polyphenyl-polymethylen-polyisocyanate, wie sie durch Anilin-Formaldehyd-Kondensation und anschliessende Phosgenierung hergestellt werden («rohes MDI») und Carbodiimidgruppen, Urethangruppen, Allophanatgruppen, Isocyanuratgruppen, Harnstoffgruppen oder Biuretgruppen aufweisenden Polyisocyanate («modifizierte Polyisocyanate»), insbesondere solche modifizierten Polyisocyanate, die sich vom 2,4- und/oder 2,6-Toluylendiisocyanat bzw. vom 4,4'-und/oder 2,4'-Diphenylmethandiisocyanat ableiten.

2. Als Ausgangskomponenten ferner Verbindungen mit mindestens zwei gegenüber Isocyanaten reaktionsfähigen Wasserstoffatomen von einem Molekulargewicht in der Regel von 400 – 10 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1000 bis 6000, z.B. mindestens zwei, in der Regel 2 bis 8, vorzugsweise aber 2 bis 4, Hydroxylgruppen aufweisende Polyester, Polyäther, Polythioäther, Polyacetale, Polycarbonate und Polyesteramide, wie sie für die Herstellung von homogenen und von zellförmigen Polyurethanen an sich bekannt sind:

a) Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäure. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren

können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäure, z.B. ω-Hydroxycapronsäure, sind einsetzbar.

b) Auch die erfindungsgemäss in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z.B. in den DE-Auslegeschriften 1 176 358 und 1 064 938 beschrieben werden, sowie auf Formit oder Formose gestartete Polyäther (DE-Offenlegungsschriften 2 639 083 bzw. 2 737 951), kommen erfindungsgemäss in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen aufweisende Polybutadiene sind erfindungsgemäss geeignet.

c) Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischäther, Polythioätherester oder Polythioätheresteramide.

d) Als Polyacetale kommen z.B. die Aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäss geeignete Polyacetale herstellen.

e) Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

f) Zu den Polyesteramiden und Polyamiden zählen z.B. die aus mehrwertigen gesättigten oder ungesättigten Carbonsäure bzw. deren Anhydriden und mehrwertigen gesättigten oder ungesättigten Aminoalkoholen, Diaminen, Polyaminen und deren Mischungen gewonnenen, vorwiegend linearen Kondensate.

g) Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehydharze sind erfindungsgemäss einsetzbar.

h) Die genannten Polyhydroxylverbindungen können vor ihrer Verwendung im Polyisocyanat-Polyadditionsverfahren noch in der verschiedensten Weise modifiziert werden: So lässt sich gemäss DE-Offenlegungsschriften 2 210 839 (US-Patentschrift 3 849 515) und 2 544 195 ein Gemisch aus verschiedenen Polyhydroxylverbindungen (z.B. aus einem Polyäther- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist. Es ist auch möglich, z.B. gemäss DE-Offenlegungsschrift 2 559 372 in die Polyhydroxylverbindungen Amidgruppen oder gemäss DE-Offenlegungsschrift 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschliessende Reaktion der Carbodimidgruppe mit einem Amin, Amid, Phosphit oder einer Carbonsäure erhält man Guanidin-, Phosphonoformamidin- bzw. Acylharnstoffgruppen aufweisende Polyhydroxylverbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Aldiminen oder Ketiminen und anschliessende Hydrolyse erhält man gemäss DE-Offenlegungsschrift 2 546 536 bzw. US-Patentschrift 3 865 791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-Offenlegungsschrift 1 694 152 (US-Patentschrift 3 625 871) beschrieben.

i) Erfindungsgemäss können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den oben genannten, Hydroxylgruppen aufweisenden Verbindungen ablaufen lässt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäss US-Patentschrift 3 869 413 bzw. DE-Offenlegungsschrift 2 550 860 eine fertige wässrige Polymerdispersion mit einer Polyhydroxylverbindung zu vermischen und anschliessend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyäthern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für das erfindungsgemässe Verfahren geeignet. Bei Verwendung von Polyätherpolyolen, welche gemäss den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2 714 291, 2 739 620 und 654 746) können mit besonderem Vorteil in Kombination mit mineralischen Füllstoffen eingesetzt werden.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäss zu verwendenden Verbindungen sind z.B. in High Polymers, Vol. XVI, «Polyurethanes, Chemistry and Technology», verfasst von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben. Selbstverständlich können Mischungen der obengenannten Verbindungen mit mindestens zwei gegenüber Isocyanaten reaktionsfähigen Wasserstoffatomen mit einem Molekulargewicht von 400 – 10 000, z.B. Mischungen von Polyäthern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

3. Gegebenenfalls als Ausgangskomponenten Verbindungen mit mindestens zwei gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:

Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethyl-hydrochinon, Äthanolamin, Diäthanolamin, N-Methyldiäthanolamin, Triäthanolamin und 3-Aminopropanol.

Als niedermolekulare Polyole kommen erfindungsgemäss auch die Gemische von Hydroxyaldehyden und Hydroxyketonen («Formose») bzw. die hieraus durch Reduktion erhaltenen mehrwertigen Alkohole («Formit») in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäss als Polyolkomponente in Betracht (DE-Offenlegungsschrift 2 638 759).

Erfindungsgemäss geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan («Isophorondiamin»), 2,4- und 2,6-Hexahydrotoluylendiamin sowie deren Gemische, Perhydro-2,4'- und 4,4'-Diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäss DE-Offenlegungsschrift 2 614 244. Auch Hydrazin und substituierte Hydrazine, z.B. Methylhydrazin, N,N'-Dimethylhydrazin und deren Homologe sowie Säuredihydrazide kommen erfindungsgemäss in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, hydracrylsäure und Terephthalsäure; Semicarbazido-alkylen-hydrazide wie z.B. β-Semicarbazidopropionsäurehydrazid (DE-Offenlegungsschrift 1 770 591), Semicarbazido-alkylencarbazinester wie z.B. 2-Semicarbazidoäthyl-carbazinester (DE-Offenlegungsschrift 1 918 504) oder auch Amino-semicarbazid-Verbindungen wie z.B. β-Aminoäthyl-semicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894; DE-Offenlegungsschrift 2 637 115).

Als Beispiele für aromatische Diamine seien Bisanthranilsäureester gemäss den DE-Offenlegungsschriften 2 040 644 und 2 160 590, 3,5- und 2,4-Diaminobenzoesäureester gemäss DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäss DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioäther (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungschrift 2 635 400 aufgeführten hochschmelzenden Diamine genannt. Beispiele für aliphatisch-aromatische Diamine sind die Aminoalkylthioaniline gemäss DE-Offenlegungsschrift 2 734 574.

Als Kettenverlängerungsmittel können erfindungsgemäss auch Verbindungen wie 1-Mercapto-3-aminopropan, gegebenenfalls substituierte Aminosäure, z.B. Glycin, Alanin, Valin, Serin und Lysin sowie gegebenenfalls substituierte Dicarbonsäure, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofuntkionelle Verbindungen sind z.B: Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther.

4. Als weitere erfindungsgemäss geeignete niedermolekulare Polyole vom Molekulargewicht bis 400 Esterdidole der allgemeinen Formeln

$$HO{-}(CH_2)_x{-}CO{-}O{-}(CH_2)_y{-}OH$$

und

$$HO{-}(CH_2)_x{-}O{-}CO{-}R{-}CO{-}O{-}(CH_2)_x{-}OH$$

in denen

R einen Alkylenrest mit 1–10, vorzugsweise 2–6, C-Atomen bzw. einen Cycloalkylen- oder Arylenrest mit 6–10 C-Atomen

$x = 2 - 6$ und

$y = 3 - 5$

bedeuten,

z.B. δ-Hydroxybutyl-ε-hydroxy-capronsäureester, ω-Hydroxyhexyl-γ-hydroxybuttersäureester, Adipinsäure-bis-(β-hydroxyäthyl)ester und Terephthalsäure-bis(β-hydroxyäthyl)ester;

Diolurethane der allgemeinen Formel

$HO-(CH_2)_x-O-CO-NH-R'-NH-CO-O-(CH_2)_x-OH$

in der

R' einen Alkylenrest mit 2 – 15, vorzugsweise 2 – 6, C-Atomen oder einen Cycloalkylen- oder Arylenrest mit 6 – 15 C-Atomen und

x eine Zahl zwischen 2 und 6 darstellen,

z.B. 1,6-Hexamethylen-bis-(β-hydroxyäthylurethan) oder 4,4'-Diphenylmethan-bis-(δ-hydroxybutylurethan);

sowie Diolharnstoffe der allgemeinen Formel

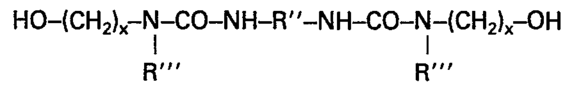

in der

R'' einen Alkylenrest mit 2–15, vorzugsweise 2–9, C-Atomen oder einen Cycloalkylen- oder Arylenrest mit 6–15 C-Atomen,

R''' Wasserstoff oder eine Methylgruppe und

x die Zahlen 2 oder 3

bedeuten,

z.B. 4,4'-Diphenylmethan-bis-(β-hydroxyäthylharnstoff) oder die Verbindung

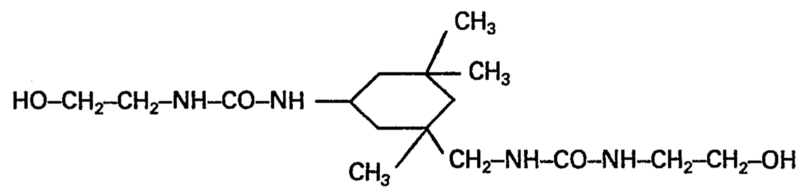

Für manche Zwecke ist es vorteilhaft, Polyole einzusetzen, welche Sulfonat- und/oder Phosphonatgruppen enthalten (DE-Offenlegungsschrift 2 719 372), vorzugsweise das Addukt von Bisulfit an Butandiol-1,4 bzw. dessen Alkoxylierungsprodukte.

5. Gegebenenfalls als Hilfs- und Zusatzmittel:

a) Wasser und/oder leicht flüchtige anorganische oder organische Substanzen als Treibmittel. Als organische Treibmittel kommen z.B. Aceton, Äthylacetat, halogensubstituierte Alkane wie Methylenchlorid, Chloroform, Äthylidenschlorid, Vinylidenchlorid, Monofluortrichlormethan, Chlordifluormethan, Dichlordifluormethan, ferner Butan, Hexan, Heptan oder Diäthyläther, als anorganische Treibmittel z.B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

b) Katalysatoren der an sich bekannten Art, z.B. tertiäre Amine, wie Triäthylamin, Tributylamin, N-Methyl-morpholin, N-Äthyl-morpholin, N,N,N',N'-Tetramethyl-äthylendiamin, Pentamethyl-diäthylentriamin und höhere Homologe (DE-Offenlegungsschriften 2 624 527 und 2 624 528), 1,4-Diazabicyclo-(2,2,2)-octan, N-Methyl-N'-dimethylaminoäthylpiperazin, Bis-(dimethylaminoalkyl)-piperazine (DE-Offenlegungsschrift 2 636 787), N,N-Dimethylbenzylamin, N,N-Dimethylcyclohexylamin, N,N-Diäthylbenzylamin, Bis-(N,N-diäthylaminoäthyl)-adipat, N,N,N',N'-Tetramethyl-1,3-butandiamin, N,N-Dimethyl-β-phenyläthylamin, 1,2-Dimethylimidazol, 2-Methylimidazol, monocyclische und bicyclische Amidine (DE-Offenlegungsschrift 1 720 633), Bis-(dialkylamino) alkyläther (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäss den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B. Triäthanolamin, Triisopropanolamin, N-Methyl-diäthanolamin, N-Äthyl-diäthanolamin, N,N-Dimethyl-äthanolamin, deren Umsetzungsprodukte mit Alkylenoxiden wie Propylenoxid und/oder Äthylenoxid sowie sekundärtertiäre Amine gemäss DE-Offenlegungsschrift 2 732 292.

Als Katalysatoren kommen ferner Silaamine mit Kohlenstoff-Silizium-Bindungen, wie sie z.B. in der DE-Patentschrift 1 229 290 (entsprechend der US-Patentschrift 3 620 984) beschrieben sind, in Frage, z.B. 2,2,4-Trimethyl-2-silamorpholin und 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäss können auch organische

Metallverbindungen, insbesondere organische Zinnverbindungen, als Katalysatoren, verwendet werden. Als organische Zinnverbindungen kommen neben schwefelhaltigen Verbindungen wie Di-n-octyl-zinn-mercaptid (DE-Auslegeschrift 1 769 367; US-Patentschrift 3 645 927) vorzugsweise Zinn(II)-salze von Carbonsäuren wie Zinn (II)-acetat, Zinn(II)-octoat, Zinn(II)-äthylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäss zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

c) Oberflächenaktive Zusatzstoffe, wie Emulgatoren und Schaumstabilisatoren. Als Emulgatoren kommen z.B. die Natriumsalze von Ricinusöl-sulfonaten oder Salze von Fettsäuren mit Aminen wie ölsaures Diäthylamin oder stearinsaures Diäthanolamin infrage. Auch Alkali- oder Ammoniumsalze von Sulfonsäuren wie etwa von Dodecylbenzolsulfonsäure oder Dinaphtalmethandisulfonsäure oder von Fettsäuren wie Ricinolsäure oder von polymeren Fettsäuren können als oberflächenaktive Zusatzstoffe mitverwendet werden.

Neben den erfindungsgemäss hergestellten Schaumstabilisatoren können noch zusätzlich weitere Stabilisatoren, also im Gemisch, verwendet werden.

Als Schaumstabilisatoren kommen vor allem Polyäthersiloxane, speziell wasserlösliche Vertreter, infrage. Diese Verbindungen sind im allgemeinen so aufgebaut, dass ein Copolymerisat aus Äthylenoxid und Propylenoxid mit einem Polydimethylsiloxanrest verbunden ist. Derartige Schaumstabilisatoren sind z.B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäss DE-Offenlegungsschrift 2 558 523.

d) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chloräthylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Russ oder Schlämmkreide.

Weitere Beispiele von gegebenenfalls erfindungsgemäss mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunstsotff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemässen Verfahrens:

Die Reaktionskomponenten werden erfindungsgemäss nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäss infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung kann erfindungsgemäss die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, infrage. In der Form schäumt das schäumfähige Reaktionsgemisch auf und bildet den Formkörper. Die Formverschäumung kann dabei so durchgeführt werden, dass das Formteil an seiner Oberfläche Zellstruktur aufweist, sie kann aber auch so durchgeführt werden, dass das Formteil eine kompakte Haut und einen zelligen Kern aufweist. Erfindungsgemäss kann man in diesem Zusammenhang so vorgehen, dass man in die Form so viel schäumfähiges Reaktionsgemisch einträgt, dass der gebildete Schaumstoff die Form gerade ausfüllt. Man kann aber auch so arbeiten, dass man mehr schäumfähiges Reaktionsgemisch in die Form einträgt, als zur Ausfüllung des Forminneren mit Schaumstoff notwendig ist. Im letztgenannten Fall wird somit unter «overcharging» gearbeitet; eine derartige Verfahrensweise ist z.B. aus den US-Patentschriften 3 178 490 und 3 182 104 bekannt.

Bei der Formverschäumung werden vielfach an sich bekannte «äussere Trennmittel», wie Siliconöle, mitverwendet. Man kann aber auch sogenannte «innere Trennmittel», gegebenenfalls im Gemisch mit äusseren Trennmitteln, verwenden,

wie sie z.B. aus den DE-Offenlegungsschriften 2 121 670 und 2 307 589 bekanntgeworden sind.

Erfindungsgemäss lassen sich auch kalthärtende Schaumstoffe herstellen (vgl. GB-Patentschrift 1 162 517, DE-Offenlegungsschrift 2 153 086).

Selbstverständlich können aber auch Schaumstoffe durch Blockverschäumung oder nach dem an sich bekannten Doppeltransportbandverfahren hergestellt werden.

Das erfindungsgemässe Verfahren sowie die erfindungsgemässe Verwendung soll anhand der folgenden Beispiele näher erläutert werden:

Zur Herstellung der Polyethersiloxane dienten nach DE-OS-2 802 668 hergestellte Acetoxypolysiloxane:

$$CH_3Si(O\overset{CH_3}{\underset{CH_3}{Si}})_n\, U_{3-a-b}\, Cl_a\, W_b$$

wobei

a + b ≤ 0,5 und

W einen $C_4F_9SO_3$-Rest bedeutet

sowie auf Butanol gestartete Polyether die Äthylenoxid- und Propylenoxideinheiten in wechselnder Folge beinhalten:

$$C_4H_9O\ [C_2H_4O]_x[C_3H_6O]_y\ H.$$

Ein Siloxanvorprodukt mit der theoretischen Zusammensetzung

$$CH_3Si\left[(O\overset{CH_3}{\underset{CH_3}{Si}})_6O\overset{O}{\overset{\|}{C}}CH_3\right]_3$$

wird z.B. wie folgt hergestellt:

229 g (2 Mol) Methyltrichlorsilan werden mit 9 g (0,3%) Perfluorbutansulfonsäure und anschliessend mit 2664 g (9 Mol) $D^*_4$ versetzt. Das Gemisch wird anschliessend auf 90 °C aufgeheizt und innerhalb 2 Stunden mit 600 g (10 Mol) Essigsäure versetzt. Während der Zugabe wird weiter hochgeheizt, so dass nach vollendeter Zugabe (HCl-Strom versiegt) die Temperatur von 130 °C erreicht wird. Es wird anschliessend 2 Stunden bei 130 °C gerührt. Ausgeheizt wird bei 130 °C und 67 mbar.

| | |
|---|---|
| Ausbeute: | 2949,7 g |
| Acetat: | 190 mval/100 g |

*Octamethylcyclotetrasiloxan

Beispiel 1

500 g [≙ 1,02 Val Acetat] eines Acetoxypolysiloxans mit einem Index n = 16,89 werden mit 2000 g getrocknetem Toluol verrührt. Hierzu wird bei Raumtemperatur, innerhalb von 15 Minuten, ein Gemisch zugegeben, das aus

1477,3 g [0,79 Val] Polyether (mit einem Molgewicht MG = 1870 und einem Ethylenoxidgehalt von 45 Gew.-% sowie einem Propylenoxidgehalt von 55 Gew.-%)

10,35 g (0,23 [0,23 Val] 2,3-Butandiol und

1500 g getr. Toluol besteht.

Ohne zu heizen werden bis zu Sättigung (mit ca. 8,67 g/h) innerhalb von ca. 2 Stunden 17,34 g getr. $NH_3$ eingeleitet.

Anschliessend wird innerhalb 30 Min. auf 70 °C aufgeheizt, wobei der Ammoniakstrom auf 11,79 g/h gesteigert wird. Nach Zugabe eines Überschusses von 5% [= 73,9 g] des obigen Polyethers, gelöst in 500 g getr. Toluol wird 90 Minuten weitergerührt. Anschliessend wird langsam abgekühlt. 30 Minuten nach Beginn der Abkühlphase wird der $NH_3$-Strom abgestellt.

Die durch Salz stark getrübte Lösung wird filtriert und das Filtrat bei max. 100 °C und 20 mbar ausgeheizt. Der klare, leicht gelb gefärbte Rückstand wird mit 20 g Diethylaminoethanol versetzt.

| | |
|---|---|
| Ausbeute: | 2008,5 g |
| η: | 640 m Pa·s |
| $n_D^{20}$: | 1,4475 |

Beispiel 2

Nach dem im Beispiel 1 beschriebenen Verfahren werden 500 g [≙ 1,01 Val Acetat] Acetoxypolysiloxan mit einem Index n = 17,1 mit dem in Beispiel 1 beschriebenen Polyether [1477,3 ] in Gegenwart von 9,9 g [0,22 Val] 2,3-Butandiol umgesetzt usw.

| | |
|---|---|
| Ausbeute: | 1975 g |
| η: | 680 m Pa·s |
| $n_D^{20}$: | 1,4473 |

Beispiel 3

500 g [≙ 1,865 Val $O\overset{O}{\overset{\|}{C}}CH_3$] Acetoxypolysiloxan mit einem Index n = 7,89 werden mit 200 g getrocknetem Toluol verrührt. Hierzu wird bei Raumtemperatur, innerhalb von 20 Minuten ein Gemisch zugegeben, das aus

2503,2 g [1,120 Val] Polyether (mit einem Molgewicht MG: 2235 und einem Ethylenoxidgehalt von 41,5 Gew.-% sowie einem Propylenoxidgehalt von 58,5 Gew.-%)

33,5 g [0,745 Val] 2,3-Butandiol und

1500 g Toluol besteht.

Ohne zu heizen werden bis zur Sättigung innerhalb von 2 Stunden ca. 32 g $NH_3$ eingeleitet. Anschliessend wird innerhalb 15 Minuten auf 70 °C aufgeheizt. Dabei wird die $NH_3$-Zufuhr auf 21,9 g/h gesteigert. Nach Zugabe von 125,2 g [≙ 5%] des obigen Polyethers, gelöst in 500 g Toluol, wird 1 Stunde und 45 Minuten weitergerührt. Anschliessend wird langsam abgekühlt. 30 Minuten nach

Beginn der Abkühlphase wird der $NH_3$-Strom abgestellt, und wie in Beispiel 1 beschrieben, verfahren.

Es entsteht ein gelbes transparentes Produkt.

| | |
|---|---|
| Ausbeute: | 2782 g |
| η: | 2580 m Pa·s |
| $n_D^{20}$: | 1,4532 |

Beispiel 4

Nach dem in Beispiel 3 beschriebenen Verfahren werden 500 g [≙ 1,660 Val Acetat] eines Acetoxypolysiloxans mit dem Index n = 9,24 mit 1958 g [0,850 Val] eines Polyethers (mit einem Molekulargewicht MG = 2304 und einem Ethylenoxidgehalt von 41,5 Gew.-% sowie einem Propylenoxidgehalt von 58,5 Gew.-%) und 36,5 g [0,81 Val] 2,3-Butandiol umgesetzt usw.

| | |
|---|---|
| Ausbeute: | 2452 g |
| η: | 1800 m Pa·s |
| $n_D^{20}$: | 1,4508 |

Beispiel 5 (Verschäumungsbeispiel)

Nach folgender Rezeptur wurde auf einer kontinuierlich arbeitenden Hochdruckmaschine (Fa. Hennecke) Weichblockschaum hergestellt:

| | |
|---|---|
| 100 Gew.-Tle. | TMP-gestartetes Eo-Po-Polyol mit OHZ 35 und dem mittleren Molekulargewicht 4800 |
| 31,8 Gew.-Tle. | Diisocyanatotoluol (Gemisch aus 2,4-Diisocyanatotoluol und 2,6-Diisocyanatotoluol im Verhältnis 80:20) |
| 31,8 Gew.-Tle. | Diisocyanatotoluol (Gemisch aus 2,4-Diisocyanatotoluol und 2,6-Diisocyanatotoluol im Verhältnis 65:35) |

Diisocyanatotoluolindex: 105

| | |
|---|---|
| 1,4 Gew.-Tle. | Stabilisator aus Beispiel 1 |
| 0,12 Gew.-Tle. | Gemisch eines Silamorpholins mit einem handelsüblichen tertiären Amin |
| 0,25 Gew.-Tle. | Zinn(II)-octoat |
| 5,5 Gew.-Tle. | Wasser. |

Die Steigzeit beträgt 53 Sekunden, die Abbindezeit 26 Sekunden.

Der erhaltene Schaumstoff ist offenzellig und störungsfrei.

Beispiel 6 (Verschäumungsbeispiel)

Ein weiterer Weichblockschaum wurde nach der folgenden Rezeptur auf der in Beispiel 5 erwähnten Maschine hergestellt:

| | |
|---|---|
| 100 Gew.-Teile | TMP-gestartetes Eo-Po-Polyol mit der OHZ 35 und dem mittleren Molekulargewicht von 4800 |
| 26,8 Gew.-Teile | Diisocyanatotoluol (Gemisch aus 2,4-Diisocyanatotoluol und 2,6-Diisocyanatotoluol im Verhältnis 65:35) |

Diisocyanatotoluolindex: 105

| | |
|---|---|
| 0,6 Gew.-Tle. | Stabilisator aus Beispiel 1 |
| 0,22 Gew.-Tle. | Gemisch eines Silamorpholins mit einem handelsüblichen tertiären Amin |
| 0,16 Gew.-Tle. | Zinn(II)-octoat |
| 2,0 Gew.-Tle. | Wasser |

Die Steigzeit beträgt 120 Sekunden, die Abbindezeit 65 Sekunden.

Der erhaltene Schaumstoff ist offenzellig und störungsfrei.

Beispiel 7 (Verschäumungsbeispiel)

Auf der in Beispiel 5 zitierten Maschine wurde ein störungsfreier Weichblockschaum nach folgender Rezeptur hergestellt:

| | |
|---|---|
| 100 Gew.-Tle. | TMP-gestartetes Eo-Po-Polyol, das mit 20 Gew.-% eines feinteiligen, polymeren organischen Füllstoffes modifiziert ist. |
| 23,3 Gew.-Tle. | Diisocyanatotoluol (Gemisch aus 2,4-Diisocyanatotoluol und 2,6-Diisocynatotoluol im Verhältnis 80:20) |
| 23,3 Gew.-Tle. | Diisocyanatotoluol (Gemisch aus 2,4-Diisocynatotoluol und 2,6-Diisocyanatotoluol im Verhältnis 65:35) |

Diisocyanatotoluolindex: 105

| | | |
|---|---|---|
| 1,2 Gew.-Tle | | Stabilisator aus Beispiel 2 |
| 0,15 Gew.- | Tle. | Triethylendiamin |
| 0,20 Gew.- | Tle. | Dimethylethanolamin |
| 0,20 Gew.- | Tle. | Zinn(II)-octoat |
| 4,0 Gew.- | Tle. | Wasser |

Die Reaktionszeit beträgt 70 Sekunden, die Abbindezeit 39 Sekunden.

Beispiel 8 (Verschäumungsbeispiel)

Auf der in Beispiel 5 zitierten Maschine wurde

ein weiterer Weichblockschaum nach folgender Rezeptur hergestellt:

| | |
|---|---|
| 100 Gew.-Tle | TMP-gestartetes Eo-Po-Polyol, das mit 20 Gew.-% feinteiliges polymeren organischen Füllstoff modifiziert ist |
| 18,4 Gew.-Tle. | Diisocyanatotoluol (Gemisch aus 2,4-Diisocyanatotoluol und 2,6-Diisocyanatotoluol im Verhältnis 65:35) |

Diisocyanatotoluolindex: 120

| | |
|---|---|
| 0,7 Gew.-Tle. | Stabilisator aus Beispiel 2 |
| 0,7 Gew.-Tle. | Gemisch eines Silamorpholins mit handelsüblichem tertiären Amin |
| 0,3 Gew.-Tle. | Dimethylethanolamin |
| 0,1 Gew.-Tle. | Zinn(II)-octoat |
| 1,1 Gew.-Tle. | Wasser |

Die Reaktionszeit beträgt 195 Sekunden, die Abbindezeit 120 Sekunden.

Der erhaltene Schaumstoff ist offenzellig und störungsfrei.

Beispiel 9 (Verschäumungsbeispiel)

Auf der gleichen Maschine wie in Beispiel 5 wurde nach folgender Rezeptur ein Weichblockschaum hergestellt:

| | |
|---|---|
| 100 Gew.-Tle | teilverzweigtes Eo-Po-Polyol mit OHZ 51 und dem mittleren Molekulargewicht von 2800 |
| 38,5 Gew.-Tle. | Diisocyanatotoluol (Gemisch aus 2,4-Diisocyanatotoluol und 2,6-Diisocyanatotoluol im Verhältnis 80:20) |

Diisocyanatotoluolindex: 105

| | |
|---|---|
| 0,8 Gew.-Tle. | Stabilisator aus Beispiel 3 |
| 0,15 Gew.-Tle. | Gemisch eines Silamorpholins mit einem tertiären handelsüblichen Amin |
| 0,40 Gew.-Tle. | handelsübliches tertiäres Amin |
| 0,2 Gew.-Tle. | Zinn(II)-octoat |
| 3,0 Gew.-Tle. | Wasser |

Die Steigzeit beträgt 101 Sekunden, die Abbindezeit 28 Sekunden.

Der erhaltene Schaumstoff ist offenzellig und störungsfrei.

Seine physikalischen Daten wurden wie folgt bestimmt:

| | |
|---|---|
| Rohdichte [kg/m$^3$] | 32 |
| Zugfestigkeit [KPa] | 141 |
| Bruchdehnung [%] | 318 |
| Stauchhärte-(40%)-[KPa] | 3,8 |
| Druckverformungsrest-(90%)-[%] | 2,7 |

Nach dem Fordtest betrug die Stauchhärte: 2,8 PKa (Stauchhärteabfall demnach 26%) und der Druckverformungsrest-(90%)-4,3%.

Beispiel 10 (Verschäumungsbeispiel)

Auf der in Beispiel 5 zitierten Hochdruckmaschine wurde ein weiterer Weichblockschaum nach folgender Rezeptur hergestellt:

| | |
|---|---|
| 100 Gew.-Tle. | TMP-gestartetes Eo-Po-Polyol mit der OHZ 45 |
| 38,8 Gew.-Tle. | Diisocyanatotoluol (Gemisch aus 2,4-Diisocyanatotoluol und 2,6-Diisocyanatotoluol im Verhältnis 80:20) |

Diisocyanatotoluolindex: 105

| | |
|---|---|
| 0,7 Gew.-Tle. | Stabilisator aus Beispiel 4 |
| 0,25 Gew.-Tle. | Gemisch eines Silamorpholins mit einem handelsüblichen tertiären Amin |
| 0,15 Gew.-Tle. | Zinn(II)-octoat |
| 3,0 Gew.-Tle. | Wasser |

Die Steigzeit beträgt 108 Sekunden, die Abbindezeit 34 Sekunden.

Der erhaltene Schaumstoff ist offenzellig und störungsfrei.

Die physikalischen Daten wurden wie folgt bestimmt:

| | |
|---|---|
| Rohdichte [kg/m$^3$] | 32 |
| Zugfestigkeit [KPa] | 114 |
| Bruchdehnung [%] | 200 |
| Stauchhärte-(40%)-[KPa] | 4,2 |
| Druckverformungsrest-(90%)-[%] | 2,9 |

Nach dem Fordtest betrug der Druckverformungsrest-(90%) 3,2% und der Stauchhärteabfall 23%.

**Patentansprüche**

1. Verfahren zur Herstellung von Polyorganopolysiloxan-Polyoxyalkylen-Blockmischpolymerisaten der allgemeinen Formel

$$[R^1Si(OSiR_2)_n]_mZ_{m-1}(OR^2)_{m+2}$$

in der

R eine gegebenenfalls halogensubstituierte Alkylgruppe mit bis zu 4 C-Atomen,

$R^1$ den Substituenten R bzw. einen Phenylrest,

$R^2$ einen aliphatischen, gegebenenfalls ungesättigten Rest mit bis zu 18 C-Atomen, oder aber eine Gruppe der Zusammensetzung

$$R^3(OCH_2CH_2)_x(OCH_2\overset{\overset{\displaystyle CH_3}{|}}{C}H)_y\text{-},$$

Z eine difunktionelle Einheit wie –O– oder

$$-O\left[\begin{array}{c} R^4 \\ | \\ C \\ | \\ R^4 \end{array}\right]_p O$$

darstellt, wobei

$R^3$ ein Kohlenwasserstoffrest mit bis zu 4 C-Atomen,

$R^4$ gleich oder verschieden ein Wasserstoffatom oder $R^3$,

n eine Zahl zwischen 3 und 30,

m eine Zahl zwischen 1 und 15,

x eine Zahl zwischen 0 und 68,

y eine Zahl zwischen 0 und 52,

x+y eine Zahl zwischen 1 und 68,

p eine Zahl zwischen 2 und 12

bedeutet, dadurch gekennzeichnet, dass ein Organopolysiloxan der allgemeinen Formel

$$R^1Si\ (OSiR_2)_nU_{3-a-b}Cl_aW_b\ _p$$

in der

U einen Rest einer niederen einbasischen Carbonsäure mit bis zu 4 C-Atomen, vorzugsweise einen Acetatrest,

W einen Rest einer fluorierten Alkansulfonsäure darstellt,

wobei a gleich oder kleiner als 1 ist und b gleich oder kleiner als 0,5 ist, das durch Umsetzung von $R^1SiCl_3$ mit einem Diorganopolysiloxan in Gegenwart fluorierter Alkansulfonsäuren bzw. deren Salzen in überschüssiger einbasischer Carbonsäure erhalten wird, mit einem Gemisch von $R^2OH$ und H–Z–H, dessen Zusammensetzung durch Index m bestimmt wird, in Gegenwart einer Base in einem organischen Lösungsmittel umgesetzt wird.

2) Verwendung von Polyorganopolysiloxan-Polyoxyalkylen-Blockmischpolymerisaten hergestellt gemäss Anspruch 1, bei der Herstellung von Polyurethanschaumstoffen.

**Revendications**

1. Procédé de fabrication de copolymères à blocs polyorganopolysiloxane-polyoxyalcoylène de formule générale:

$$[R^1Si(OSiR_2)_n]\ _mZ_{m-1}(OR^2)_{m+2}$$

dans laquelle

R représente un groupe alcoyle éventuellement halo-substitué ayant jusqu'à 4 atomes de carbone,

$R^1$ le substituant R ou un radical phényle,

$R^2$ un radical aliphatique éventuellement insaturé ayant jusqu'à 18 atomes de carbone ou bien un groupe de composition:

$$R^3(OCH_2CH_2)_x(OCH_2\overset{\overset{\displaystyle CH_3}{|}}{C}H)_y\text{-},$$

Z une unité bifonctionelle telle que –O– ou

$$-O\left[\begin{array}{c} R^4 \\ | \\ C \\ | \\ R^4 \end{array}\right]_p O$$

$R^3$ signifiant un radical hydrocarboné ayant jusqu'à 4 atomes de carbone,

$R^4$ sont identiques ou différents et représentent un atome d'hydrogène ou $R^3$,

n un nombre entre 3 et 30,

m un nombre entre 1 et 15,

x un nombre entre 0 et 68,

y un nombre entre 0 et 52,

x+y un nombre entre 1 et 68,

p un nombre entre 2 et 12,

caractérisé en ce qu'on fait réagir un organopolysiloxane de formule générale

$$R^1Si\ (OSiR_2)_n\ U_{3-a-b}Cl_aW_b$$

dans laquelle

U représente un radical d'un acide carboxylique monobasique inférieur ayant jusqu'à 4 atomes de carbone, de préférence un radical acétate,

W un radical d'un acide alcane-sulfonique fluoré, où a est égal ou inférieur à 1 et b est égal ou inférieur à 0,5, qui a été obtenu par réaction de $R^1SiCl_3$ avec un diorganopolysiloxane en présence d'acides alcane-sulfoniques fluorés ou de leurs sels dans de l'acide carboxylique monobasique en excès, avec un mélange de $R^2OH$ et de H–Z–H, dont la composition est déterminée par l'indice m, en présence d'une base dans un solvant organique.

2. Utilisation des copolymères à blocs polyorganopolysiloxane-polyxyalcoylène préparés à la revendication 1 dans la fabrication de matiéres cellulaires en polyuréthane.

**Claims**

1. Process for the preparation of polyorganopolysiloxane/polyoxyalkylene block copolymers of the general formula

$$[R^1Si(OSiR_2)_n]_mZ_{m-1}(OR^2)_{m+2}$$

in which

R represents an optionally halogen-substituted alkyl group with up to 4 C atoms,

$R^1$ represents the substituent R or a phenyl radical,

$R^2$ represents an aliphatic, optionally unsaturated radical with up to 18 C atoms or a group having the composition

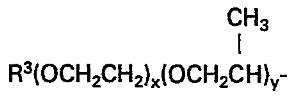

and

Z represents a difunctional unit such as –O– or

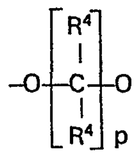

wherein

$R^3$ denotes a hydrocarbon radical with up to 4 C atoms,

the symbols $R^4$ are identical or different and denote a hydrogen atom or $R^3$,

n denotes a number between 3 and 30,

m denotes a number between 1 and 15,

x denotes a number between 0 and 68,

y denotes a number between 0 and 52,

x+y denotes a number between 1 and 68 and

p denotes a number between 2 and 12,

characterised in that an organopolysiloxane of the general formula

$$R^1Si\ (OSiR_2)_n\ U_{3-a-b}Cl_aW_b$$

in which

U represents a radical of a lower monobasic carboxylic acid with up to 4 C atoms, preferably an acetate radical, and

W represents a radical of a fluorinated alkanesulphonic acid,

and wherein

a is equal to or less than 1 and

b is equal to or less than 0,5,

which is obtained by reacting $R^1SiCl_3$ with a diorganopolysiloxane in the presence of fluorinated alkanesulphonic acids or salts thereof, in excess monobasic carboxylic acid, is reacted with a mixture of $R^2OH$ and H–Z–H, the composition of which is determined by the index m, in the presence of a base, in an organic solvent.

2. Use of polyorganopolysiloxane/polyoxyalkylene block copolymers prepared according to Claim 1, in the production of polyurethane foams.